Europäisches Patentamt

European Patent Office

Office européen des brevets

(11) Veröffentlichungsnummer: **0 285 180**

**A2**

## (12) EUROPÄISCHE PATENTANMELDUNG

(21) Anmeldenummer: 88105321.9

(51) Int. Cl.⁴: **H02N 1/08**

(22) Anmeldetag: 01.04.88

(30) Priorität: 02.04.87 DE 3711131

(43) Veröffentlichungstag der Anmeldung:
05.10.88 Patentblatt 88/40

(84) Benannte Vertragsstaaten:
AT BE CH DE ES FR GB GR IT LI LU NL SE

(71) Anmelder: **Daelman, Koen**
**Falkenstrasse 18**
**D-4803 Steinhagen(DE)**

(72) Erfinder: **Daelman, Koen**
**Falkenstrasse 18**
**D-4803 Steinhagen(DE)**

(74) Vertreter: **Patentanwaltsbüro Cohausz &**
**Florack**
**Schumannstrasse 97**
**D-4000 Düsseldorf 1(DE)**

(54) **Elektromotor.**

(57) Die Erfindung betrifft einen Elektromotor mit einem zylindrischen, eine elektrisch isolierende Mantelfläche aufweisenden Rotor und mit außerhalb der Mantelfläche und mit geringem Abstand gegenüber dieser angeordneten Elektroden, deren Potential in Umfangsrichtung abwechselt, wobei die Elektroden ausschließlich im Bereich außerhalb der Mantelfläche des Rotors angeordnet sind.

FIG.1

EP 0 285 180 A2

## Elektromotor

Die Erfindung betrifft einen Elektromotor mit einem zylindrischen, eine elektrisch isolierende Mantelfläche aufweisenden Rotor und mit außerhalb der Mantelfläche und mit geringem Abstand gegenüber dieser angeordneten Elektroden, deren Potential in Umfangsrichtung abwechselt.

Ein solcher Elektromotor ist aus der AT-PS 178964 bekannt. Jeder außerhalb der Mantelfläche des Motors angeordnete Elektrode ist bei diesem bekannten Motor eine weitere, im Inneren der Mantelfläche angebrachte Elektrode, ein sogenannter Ionisator zugeordnet, der gleiches Potential wie ihm zugeordnete Elektrode aufweist. Die Ionisatoren bestehen aus sich längs der Rotorachse erstreckenden Metalldrähten, die mittels eines weiteren zylindrischen Körpers gespannt gehalten werden. Eine solche Anordnung erfordert aber einen hohen fertigungstechnischen Aufwand bei der Herstellung des Motors.

Ein anderer Elektromotor ist aus der US 3297888 bekannt. Dort sind die Elektroden auf der Innenseite eines hohlzylindrischen Rotors angeordnet. Zusätzlich befinden sich jeder Elektrode zugeordnet gebogene Metallstreifen auf der Außenseite des Rotors, deren Spitzen jeweils einen bestimmten Abstand zur Rotormantelfläche einhalten müssen. Eine solche Ausführung ist ebenfalls schwierig herzustellen.

Aufgabe der Erfindung ist es daher, einen Elektromotor der eingangs genannten Art im Aufbau zu vereinfachen.

Gemäß der Erfindung wird diese Aufgabe dadurch gelöst, daß die Elektroden ausschließlich im Bereich außerhalb der Mantelfläche des Rotors angeordnet sind.

Beim Umlaufen des Rotors bringt die eine Elektrode Elektronen auf die Oberfläche des Rotors auf, die dann von der anderen Elektrode wieder abgeführt werden. Über den Umfang des Rotors kann eine Mehrzahl von Elektroden hintereinander angeordnet sein. Der Rotor kann vollständig aus einem elektrisch isolierenden Material bestehen oder nur mit einem solchen Material beschichtet sein.

Der Rotor besteht vorzugsweise aus einem Hohlzylinder, dessen Mantelfläche elektrisch isolierend ist. Der Innenraum des Zylinders kann mit einem Material hoher Dichte, z.B. mit Blei, ausgefüllt sein. Dadurch erhält der Rotor eine höhere Massenträgheit und damit eine größere Laufruhe. Der Innenraum kann aber auch mit einem Elektrid ausgefüllt sein, wodurch sich eine Erhöhung der Ladungskonzentration auf der Rotormantelfläche ergibt.

Die Figuren 1 bis 3 zeigen schematisch Ausführungsarten der Erfindung;

Figur 4 zeigt ein Ausführungsbeispiel der Erfindung.

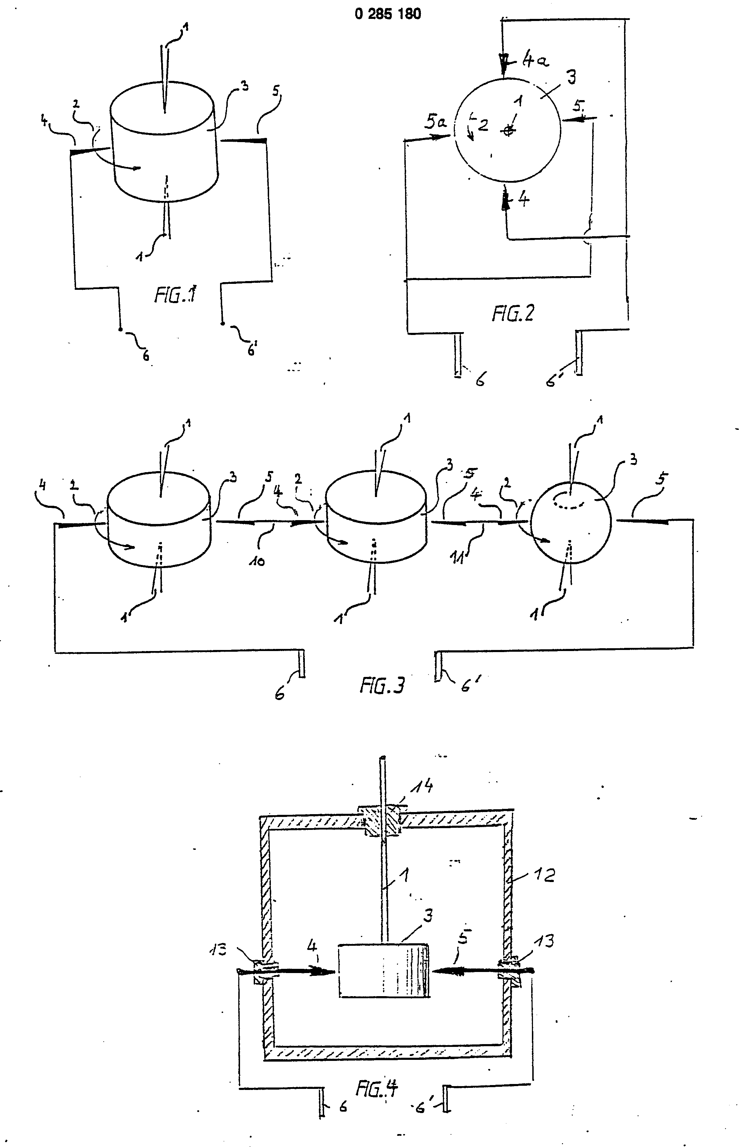

Ein zylindrischer Rotor 3 aus Glas oder einem elektrisch nichtleitenden Kunststoff ist um eine vertikale Achse 1 drehbar, beispielsweise in Richtung des Pfeiles 2. Bei der Anordnung nach Fig. 1 sind zwei Elektroden 4 und 5 in Richtung einer Diagonalen des Rotors 3 derart angeordnet, daß ihre spitzen Enden bis dicht an den Rotor reichen. Die Elektroden 4 und 5 sind mit den Klemmen 6 und 6' einer elektrischen Hochspannungsquelle von beispielsweise 10000 V verbunden. Wenn man den Rotor in Richtung des Pfeiles 2 ein wenig bewegt, so wird er durch Elektronen, die aus der Elektrode 4 ausströmen und anschließend von der Elektrode 5 wieder aufgenommen werden, mit erhöhter Geschwindigkeit in Umlauf gesetzt. Bei einem Durchmesser des Rotors 3 von 30 mm kann die Vorrichtung eine elektrische Leistung von etwa 30 W aufnehmen, die als mechanische Energie an der Achse 1 mit großem Wirkungsgrad abgenommen werden kann. Der Durchmesser des Rotors 3 kann grundsätzlich um Größenordnungen größer sein. Die an den Elektroden 4 und 5 anliegende Spannung beträgt vorzugsweise mindestens einige Tausend Volt. Die Elektroden 4 und 5 können aus Metall bestehen. Ihre Spitzen oder mit kleinen Kugeln versehenen Enden haben von der Oberfläche des Rotors 3 einen Abstand, der vorzugsweise Bruchteile von Millimetern betragen kann.

Bei der in Fig. 2 dargestellten Anordnung sind die Elektroden 4 und 5 in einem kleineren Abstand voneinander angeordnet, und gegenüber diesem Elektrodenpaar 4, 5 ist ein weiteres Elektrodenpaar 4a, 5a vorgesehen.

Bei der in Fig. 3 dargestellten Anordnung sind drei Rotoren 3 mit ihren Elektroden 4 und 5 in Serie hintereinandergeschaltet, wobei die Elektrode 5 des ersten Rotors mit der Elektrode 4 des zweiten Rotors durch eine Leitung 10 und die Elektrode 5 des zweiten Rotors mit der Elektrode 4 des dritten Rotors durch eine Leitung 11 verbunden ist. Wie diese Figur zeigt, können die Achsen 1 der Rotoren 3 parallel zueinander oder auch in Winkeln zueinander liegen.

Bei dem in Fig. 4 dargestellten Ausführungsbeispiel ist der Rotor 3 mit den Elektroden 4 und 5 in einem luftdichten Gehäuse 12 untergebracht, durch dessen Wände die Achse 1 durch eine Dichtung 14 hindurchgeht und die Elektroden 4 und 5 durch Dichtungen 13 hindurchgehen. Das Gehäuse 12 kann evakuiert sein oder mit einem Gas, z.B. Wasserstoff oder Edelgas, gefüllt sein.

Grundsätzlich können auch mehr als zwei Paare Elektroden vorgesehen sein. Es kann auch eine Vorrichtung zum Verstellen der Elektroden in Umfangrichtung des Rotors vorgesehen sein.

Der Ausdruck "Elektrode" ist im allgemeinsten Sinne zu verstehen.

## Ansprüche

1. Elektromotor mit einem zylindrischen, eine elektrisch isolierende Mantelfläche aufweisenden Rotor (3) und mit außerhalb der Mantelfläche und mit geringem Abstand gegenüber dieser angeordneten Eletroden (4, 5), deren Potential in Umfangsrichtung des Rotors (3) abwechselt **dadurch gekennzeichnet,** daß die Elektroden (4, 5) auschließlich im Bereich außerhalb der Mantelfläche des Rotors (3) angeordnet sind.

2. Elektromotor nach Anspruch 1, **dadurch gekennzeichnet,** daß nur zwei Elektroden (4, 5) vorgesehen sind.

3. Elektromotor nach Anspruch 1 oder 2, **dadurch gekennzeichnet,** daß der Abstand zwischen den Elektroden (4, 5) eines Elektrodenpaars verstellbar ist.

4. Elektromotor nach einem der Ansprüche 1 bis 3, **dadurch gekennzeichnet,** daß die Elektrode (4, 5) in Richtung auf den Rotor (3) spitz zuläuft.

5. Elektromotor nach einem der Ansprüche 1 bis 4, **dadurch gekennzeichnet,** daß der Rotor (3)aus einem elektrisch isolierenden Vollzylinder besteht.

6. Elektromotor nach einem der Ansprüche 1 bis 4, **dadurch gekennzeichnet,** daß der Rotor (3) ein Hohlzylinder mit elektrisch isolierender Mantelfläche ist.

7. Elektromotor nach Anspruch 6, **dadurch gekennzeichnet,** daß der Innenraum des Hohlzylinders mit einem Material hoher Dichte, insbesondere mit Blei ausgefüllt ist.

8. Elektromotor nach Anspruch 6, **dadurch gekennzeichnet,** daß der Innenraum des Hohlzylinders mit einem Elektrid ausgefüllt ist.

9. Elektromotor nach einem der Ansprüche 1 bis 8, **dadurch gekennzeichnet,** daß er in einem luftdichten, evakuierbaren Gehäuse (12) angeordnet ist.

10. Elektromotor nach Anspruch 9, **dadurch gekennzeichnet,** daß das Gehäuse (12) Wasserstoff, ein Edelgas oder eine inerte Flüssigkeit enthält.

0 285 180

FIG.1

FIG.2

FIG.3

FIG.4